# EUROPÄISCHE PATENTANMELDUNG

(11) **EP 4 124 917 A1**
(43) Veröffentlichungstag der Anmeldung: **01.02.2023**
(21) Anmeldenummer: 21188875.5
(22) Anmeldetag: 30.07.2021
(51) Int. Cl.: G05B 19/05

(54) **STEUERBARE VERBINDUNG ZWISCHEN DATENQUELLEN UND DATENSENKEN BEI EINER AUTOMATISIERUNGSLÖSUNG**

(71) Anmelder: Siemens Aktiengesellschaft, 80333 München (DE)
(72) Erfinder: Loeppke, Daniel, 76467 Bietigheim (DE)

(57) **Zusammenfassung**

Vorgeschlagen wird eine Engineering Station für eine technische Anlage, insbesondere eine Fertigungs- oder Prozessanlage, in welcher eine grafische Entwicklungsumgebung (1) zum Erstellen einer Automatisierungslösung für die technische Anlage auf Basis der grafischen Programmiersprache Continuous Function Chart computerimplementiert ist, wobei innerhalb der grafischen Entwicklungsumgebung (1) Datenquellen (2) und Datensenken (3) grafisch miteinander verbindbar sind, um in der erstellten Automatisierungslösung eine reale Verbindung der Datenquellen (2) und Datensenken (3) zu bewirken. Die Engineering Station ist dadurch gekennzeichnet, dass in der Entwicklungsumgebung (1) die Datenquellen (2) und Datensenken (3) jeweils derart grafisch miteinander verbindbar sind, dass in der erstellten Automatisierungslösung eine Datenübertragung zwischen der jeweiligen Datenquelle (2) und der Datensenke (3) nur dann erfolgt, wenn die zu übertragenden Daten ein in der Entwicklungsumgebung (1) vorgebbares Kriterium erfüllen.

## Beschreibung

Die Erfindung betrifft eine Engineering Station für eine technische Anlage, insbesondere eine Fertigungs- oder Prozessanlage mit den Merkmalen des Oberbegriffs des Anspruchs 1. Außerdem betrifft die Erfindung ein Leitsystem für eine technische Anlage und eine computerimplementierte, grafische Entwicklungsumgebung.

Innerhalb einer computerimplementierten Entwicklungsumgebung, die sich der grafischen Programmiersprache "Continuous Function Chart" (kurz: CFC) bedient, ist nur ein einziges, grafisches Verbindungselement bekannt, welches zur Verbindung einer Datenquelle mit einer Datensenke verwendet werden kann. Dieses Verbindungselement wird in der Entwicklungsumgebung üblicherweise als eine Linie oder eine polygonale Linie dargestellt, die die Datenquelle mit der Datensenke grafisch verbindet. Semantisch stellt dieses Verbindungselement einen kontinuierlichen Datenstrom von der Datenquelle zu der Datensenke dar.

Die Entwicklungsumgebung wird dazu verwendet, eine Automatisierungslösung für eine technische Anlage wie eine Fertigungs- oder Prozessanlage zu erstellen. Das grafische (d.h. virtuelle) Verbindungselement entspricht einer zyklischen Datenübertragung zwischen der Datenquelle (beispielsweise einem Messumformer) und der Datensenke (beispielsweise einer Datenschnittstelle) in der (realen) Automatisierungslösung. Weitere Konfigurationsmöglichkeiten des Verbindungselementes stehen in der CFC-basierten Entwicklungsumgebung nicht zur Verfügung. Ein Nutzer der Entwicklungsumgebung muss bislang aufwändige Schritte unter Einbezug maschinennaher Programmiersprachen wie STL oder SCL vornehmen, um das Verbindungselement entsprechend umfassender zu konfigurieren.

Der Erfindung liegt die Aufgabe zugrunde, eine Engineering Station für eine technische Anlage so auszustatten, so dass eine damit erstellte Automatisierungslösung Verbindungen zwischen Datenquellen und Datensenken effektiv automatisieren kann.

Die zuvor formulierte Aufgabe wird durch eine Engineering Station für eine technische Anlage mit den Merkmalen des Anspruchs 1 gelöst.

In der Engineering Station ist eine grafische Entwicklungsumgebung zum Erstellen einer Automatisierungslösung für die technische Anlage auf Basis der grafischen Programmiersprache Continuous Function Chart computerimplementiert. Dabei sind innerhalb der grafischen Entwicklungsumgebung Datenquellen und Datensenken grafisch miteinander verbindbar, um in der erstellten Automatisierungslösung eine reale Verbindung der Datenquellen und Datensenken zu bewirken.

Die Engineering Station ist dadurch gekennzeichnet, dass in der Entwicklungsumgebung die Datenquellen und Datensenken jeweils derart grafisch miteinander verbindbar sind, dass in der erstellten Automatisierungslösung eine Datenübertragung zwischen der jeweiligen Datenquelle und der Datensenke nur dann erfolgt, wenn die von der jeweiligen Datenquelle zu übertragenden Daten eine in der Entwicklungsumgebung vorgebbare Eigenschaft aufweisen.

Unter einer "Engineering Station" wird vorliegend eine Workstation verstanden, die dazu ausgebildet ist, verschiedene Hardware- und Software-Projekte für ein (Prozess-)Leitsystem einer technischen Anlage zu erstellen, verwalten, archivieren und dokumentieren. Mithilfe von speziellen Software-Entwurfswerkzeugen (Engineering Toolset) sowie vorgefertigten Bausteinen und Plänen kann mittels der Engineering Station ein Zusammenspiel von leittechnischen Geräten und Einrichtungen der technischen Anlage geplant und verwaltet werden. Als Engineering Station kann ein gewöhnlicher Rechner, welcher über eine Monitoreinheit verfügt, dienen.

Die von der Entwicklungsumgebung erzeugte Automatisierungslösung kann in an sich bekannter Art und Weise auf ein Automatisierungsgerät übertragen werden. Automatisierungsgeräte werden zur Realisierung einer Automatisierung benutzt und können beispielsweise speicherprogrammierbare Steuerungen oder Leitsysteme sein, die eine übergeordnete Steuerungsfunktion für untergeordnete speicherprogrammierbare Steuerungen darstellen. Unter einer Automatisierung (oder Automatisierungslösung) wird vorliegend die selbständige (automatisierte) Erfassung und Beeinflussung physikalischer Größen mithilfe technischer Mittel verstanden. Dabei werden in der Regel Maschinen, Anlagen oder sonstige Einrichtungen in die Lage versetzt, selbsttätig zu arbeiten.

Die Erfindung schlägt in besonders vorteilhafter Weise vor, das grafische Verbindungselement in der (auf CFC basierenden) Entwicklungsumgebung derart weiterzubilden, dass die Datenübertragung zwischen der Datenquelle und der Datensenke nicht mehr nur zyklisch, sondern bedingungsgesteuert ausgebildet sein kann. Die erfindungsgemäße Engineering Station ermöglicht es, Eigenschaften für die zu übertragenden Daten festzulegen, die nur dann eine Datenübertragung zwischen der Datenquelle und der Datensenke erlauben, wenn die zu übertragenden Daten diese Eigenschaft aufweisen. Eine Nutzung von maschinennahen Programmiersprachen, wie zuvor erläutert, ist mit der erfindungsgemäßen Engineering Station obsolet.

Die in der Entwicklungsumgebung vorgebbare Eigenschaft kann ein Schwellwert sein, der insbesondere eine relative Abweichung eines Wertes eines Datums der Datenquelle bezogen auf einen Sollwert des Datums der Datenquelle darstellen kann. Ein Nutzer der Entwicklungsumgebung kann beispielsweise festlegen, dass eine Datenübertragung zwischen der Datenquelle und der Datensenke nur dann stattfindet, wenn die Daten betragsmäßige Werte aufweisen, die mehr als 10 Prozent von einem vorgegebenen Sollwert abweichen. Damit kann effektiv und einfach eine kommunikationstechnisch minimal invasive Verbindung zwischen der Datenquelle und der Datensenke automatisiert werden.

Die Datenübertragung zwischen der Datenquelle und der Datensenke muss nicht notwendigerweise unidirektional (von der Datenquelle zu der Datensenke sein). Vielmehr kann sie auch bidirektional ausgebildet sein. Dies bedeutet, dass Datenquelle und Datensenke ihre nominellen Funktionen auch wechseln können. Hierzu können in der Entwicklungsumgebung verschiedene (grafische) Verbindungselemente vorgehalten werden. Alternativ kann auch ein einziges Verbindungselement in der Entwicklungsumgebung entsprechend konfiguriert werden.

Die obenstehende Aufgabe wird zudem gelöst durch ein Leitsystem für eine technische Anlage, das eine Engineering Station umfasst, welche wie zuvor erläutert ausgebildet ist. Zusätzlich weist das Leitsystem wenigstens einen Operator Station Server und einen Operator Station Client zum Bedienen und Beobachten der technischen Anlage auf.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst.

Das Leitsystem kann Sensoren zur Ermittlung von Messwerten sowie verschiedene Aktoren umfassen. Zudem kann das Leitsystem sogenannte prozessnahe Komponenten umfassen, die zur Ansteuerung der Aktoren bzw. Sensoren dienen.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern (sogenannten Operatoren) zur Verfügung stellt. Der Operator Station Server stellt in der Regel eine Kommunikationsverbindung zu Automatisierungssystemen der technischen Anlage her und gibt Daten der technischen Anlage an den sogenannten Operator Station Client weiter, die zur Bedienung und Beobachtung eines Betriebs der einzelnen Funktionselemente der technischen Anlage dienen. Als Operator Station Client kann ein gewöhnlicher Rechner, welcher über eine Monitoreinheit verfügt, dienen. Ein Operator Station Client kann aber auch ein Smartphone, ein Tablet oder dergleichen sein.

Der Operator Station Client kann sich zusammen mit dem Operator Station Server innerhalb der technischen Anlage befinden. Es ist aber auch möglich, dass der Operator Station Server und/oder der Operator Station Client remote, d.h. außerhalb der technischen Anlage befindlich sind. Insbesondere kann der Operator Station Client in einer Cloud, d.h. in einem Computernetzwerk außerhalb der technischen Anlage, realisiert sein.

Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Unter einem Operator wird ein menschlicher Bediener der technischen Anlage verstanden. Der Operator interagiert mittels spezieller Benutzerschnittstellen mit der technischen Anlage bzw. dessen Leitsystem und steuert spezielle technische Funktionen der technischen Anlage. Hierzu kann der Operator ein Bedien- und Beobachtungssystem (den Operator Station Client in Verbindung mit dem Operator Station Server) des Leitsystems nutzen.

Die obenstehende Aufgabe wird zudem gelöst durch eine computerimplementierte, grafische Entwicklungsumgebung für eine Engineering Station für eine technische Anlage, insbesondere Fertigungs- oder Prozessanlage, zum Erstellen einer Automatisierungslösung für die technische Anlage auf Basis der grafischen Programmiersprache Continuous Function Chart, wobei innerhalb der grafischen Entwicklungsumgebung Datenquellen und Datensenken grafisch miteinander verbindbar sind, um in der erstellten Automatisierungslösung eine reale Verbindung der Datenquellen und Datensenken zu bewirken.

Die Entwicklungsumgebung ist dadurch gekennzeichnet, dass in der Entwicklungsumgebung die Datenquellen und Datensenken jeweils derart grafisch miteinander verbindbar sind, dass in der erstellten Automatisierungslösung eine Datenübertragung zwischen der jeweiligen Datenquelle und der Datensenke nur dann erfolgt, wenn die von der jeweiligen Datenquelle zu übertragenden Daten eine in der Entwicklungsumgebung vorgebbare Eigenschaft aufweisen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Es zeigen:
- FIG 1: eine grafische Bedienoberfläche einer Entwicklungsumgebung einer erfindungsgemäßen Engineering Station; und
- FIG 2: eine funktionelle Darstellung eines Verbindungselementes zwischen einer Datenquelle und einer Datensenke.

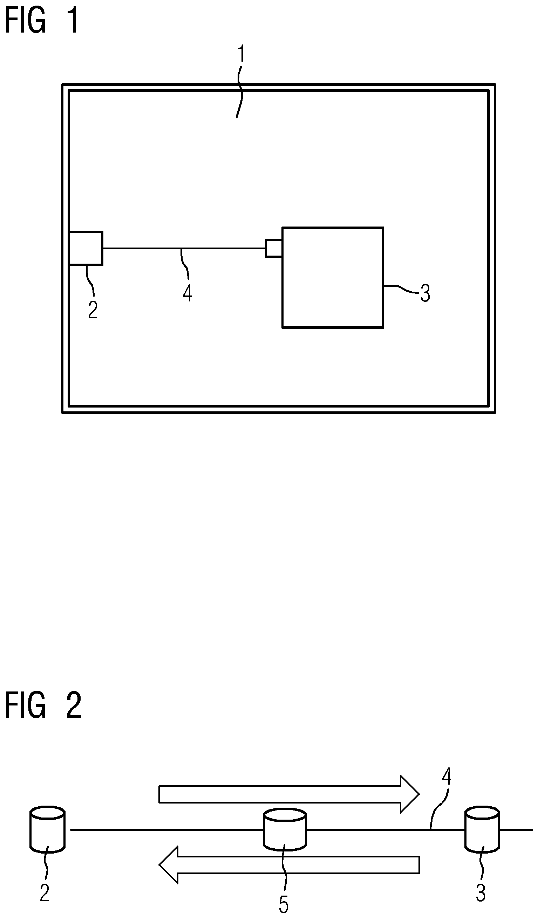

FIG 1 zeigt eine grafische Entwicklungsumgebung 1, in welcher eine Datenquelle 2 und eine Datensenke 3 grafisch repräsentiert sind. Die Entwicklungsumgebung 1 ist auf einer (nicht dargestellten) Engineering Station einer technischen Anlage computerimplementiert. Sie basiert auf der grafischen Programmiersprache Continuous Function Chart (CFC) und dient der Erzeugung einer Automatisierung oder Automatisierungslösung für die technische Anlage.

Die Datenquelle 2 kann die grafische (virtuelle bzw. digitale) Repräsentation eines Sensors, eines Messumformers oder einer anderen Komponente einer technischen Anlage darstellen. Die Datenquelle 2 ist vorliegend dazu ausgebildet, Daten an die Datensenke zu übertragen. Aber auch eine Datenübertragung in entgegengesetzter Richtung ist möglich.

Die Datensenke 3 kann ein Schnittstellenmodul wie beispielsweise die ET 200 SP der Firma SIEMENS repräsentieren. Die Datensenke 3 kann Daten der Datenquelle 2 empfangen, aber auch Daten an diese übertragen.

Grafisch zwischen der Datenquelle 2 und der Datensenke 3 ist ein Verbindungselement 4 in Form einer einfachen Linie angeordnet. Die Funktionalitäten dieses Verbindungselementes 4 werden im Folgenden anhand FIG 2 erläutert. FIG 2 zeigt einen bidirektionalen Datenaustausch zwischen der Datenquelle 2 und der Datensenke 3. In einem Speicherelement 5 der Automatisierungslösung, welches dem Verbindungselement 4 zugeordnet ist, kann ein Benutzer der Engineering Station ein Kriterium hinterlegen. Dieses Kriterium kann zum Beispiel den Wert der zwischen der Datenquelle 2 und der Datensenke 3 zu übertragenden Daten betreffen. So kann beispielweise festgelegt sein, dass Daten nur dann von der Datenquelle 2 zu der Datensenke 3 übertragen werden, wenn sich der Wert des aktuell an der Datenquelle 2 anliegenden Datums sich gegenüber einem vorherigen Wert geändert hat (absolut oder um einen relativen Wert). Umgekehrt kann die Datenübertragung von der Datensenke 3 zu der Datenquelle 2 anhand eines vergleichbaren Kriteriums erfolgen. Die Kriterien können identisch sein, können sich aber auch voneinander unterscheiden.

Obwohl die Erfindung im Detail durch das bevorzugte Ausführungsbeispiel und die Figuren näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Engineering Station für eine technische Anlage, insbesondere eine Fertigungs- oder Prozessanlage, in welcher eine grafische Entwicklungsumgebung (1) zum Erstellen einer Automatisierungslösung für die technische Anlage auf Basis der grafischen Programmiersprache Continuous Function Chart computerimplementiert ist, wobei innerhalb der grafischen Entwicklungsumgebung (1) Datenquellen (2) und Datensenken (3) grafisch miteinander verbindbar sind, um in der erstellten Automatisierungslösung eine reale Verbindung der Datenquellen (2) und Datensenken (3) zu bewirken,
**dadurch gekennzeichnet, dass**
in der Entwicklungsumgebung (1) die Datenquellen (2) und Datensenken (3) jeweils derart grafisch miteinander verbindbar sind, dass in der erstellten Automatisierungslösung eine Datenübertragung zwischen der jeweiligen Datenquelle (2) und der Datensenke (3) nur dann erfolgt, wenn die zu übertragenden Daten ein in der Entwicklungsumgebung (1) vorgebbares Kriterium erfüllen.

2. Engineering Station nach Anspruch 1, bei der das in der Entwicklungsumgebung (1) vorgebbare Kriterium ein Schwellwert ist, der insbesondere eine relative Abweichung eines Wertes eines Datums der Datenquelle (2) bezogen auf einen Sollwert des Datums der Datenquelle (3) darstellt.

3. Engineering Station nach Anspruch 1 oder 2, bei der die Datenübertragung zwischen der Datenquelle (2) und der Datensenke (3) bidirektional ausgebildet ist.

4. Engineering Station nach Anspruch 1 oder 2, bei der die Datenübertragung zwischen der Datenquelle (2) und der Datensenke (3) unidirektional ausgebildet ist.

5. Leitsystem für eine technische Anlage, das eine Engineering Station nach einem der Ansprüche 1 bis 4 und wenigstens einen Operator Station Server und einen Operator Station Client zum Bedienen und Beobachten einer technischen Anlage, insbesondere einer Fertigungs- oder Prozessanlage, umfasst.

6. Computerimplementierte, grafische Entwicklungsumgebung (1) für eine Engineering Station für eine technische Anlage, insbesondere Fertigungs- oder Prozessanlage, zum Erstellen einer Automatisierungslösung für die technische Anlage auf Basis der grafischen Programmiersprache Continuous Function Chart, wobei innerhalb der grafischen Entwicklungsumgebung (1) Datenquellen (2) und Datensenken (3) grafisch miteinander verbindbar sind, um in der erstellten Automatisierungslösung eine reale Verbindung der Datenquellen (2) und Datensenken (3) zu bewirken,
**dadurch gekennzeichnet, dass**
in der Entwicklungsumgebung (1) die Datenquellen (2) und Datensenken (3) jeweils derart grafisch miteinander verbindbar sind, dass in der erstellten Automatisierungslösung eine Datenübertragung zwischen der jeweiligen Datenquelle (2) und der Datensenke (3) nur dann erfolgt, wenn die von der jeweiligen Datenquelle (2) zu übertragenden Daten ein in der Entwicklungsumgebung (1) vorgebbares Kriterium aufweisen.
